# EUROPEAN PATENT SPECIFICATION

(11) **EP 1 008 703 B1**
(45) Date of publication and mention of the grant of the patent: **05.11.2003**
(21) Application number: 99200848.2
(22) Date of filing: 22.03.1999
(51) Int. Cl.: E04F 15/22, E01C 13/04, B32B 15/08

(54) **Indoor sports floor with steel pressure spreading layer**
Innensportfussboden mit Druckverteilungsschicht aus Stahl
Plancher d'intérieur de sport avec couche de dispersion de pression en acier

(30) Priority: 08.12.1998 EP 98204101
(43) Date of publication of application: 14.06.2000
(73) Proprietor: Polyfer BVBA, 2890 Sint-Amands (BE)
(72) Inventor: Waumans, André, 2890 St.-Amands (BE)
(74) Representative: Luys, Marie-José A.H.

(56) References cited:
- EP-A- 0 790 371
- CH-A- 631 228
- GB-A- 2 035 435

## Description

### The present invention relates to a floor, mainly used as an indoor sports floor as described in the preamble of the first claim.

Floors having an elastic bottom layer, a pressure spreading layer and a top layer, which mostly offer at the same time a large reduction of power, a small loss of energy and a large ball reflection, are used as an area-elastic sports floor.

With all floors of this type the pressure-spreading layer consists of one or more layers of plates made of a mixture of ground wood chips (of diverse size and composition) and a binding agent, or a mixture of recycled waste materials (polyurethane, scraps of paper, etc.) bound with an isocyanate. This mixture is compressed under high pressure and/or temperature into plates of different thickness and density. Some plates need an expensive coating at both sides. The plates may or may not be attached to a structure of wooden strips or may be positioned on an elastic bottom layer of rubber or recycled foam. Some plates are made of an expensive aluminium alloy that is profiled or extruded and combined with tongue and groove.

The disadvantages of these systems are the following:
1. The plates are susceptible to the atmosphere and will swell, rot or warp due to moisture and temperature. Moreover, if they are made of an aluminium alloy, an expensive extrusion is needed to profile tongue and groove. This tongue and groove can only be profiled in one direction so that the crosscut joints remain loose and may move among themselves.
2. The difference in thickness (thicker for tongue and groove) of these aluminium plates produces an unsteady cushioning and the tongue and groove combination, which is usually clicked together, becomes unstable and is loosed under pressure. Moreover, aluminium remains permanently deformed by the least flexure, wich is not the case with hardened steel that returns like a spring.
3. As a binding agent formaldehyde (which can produce a poisenous formaldehyde gas) or isocyanate is used, which are both polluting products. In order to work bauxite into aluminium an enormous amount of energy is needed. Moreover, the profiling of fortified aluminium plates equiped with tongue and groove, is a very expensive matter, which cannot be said of steel plates that are rolled in a continuously cold or warm process.
4. These "woody" plates are glued, nailed or screwed together or combined with tongue and groove. This method is labour-intensive and as a result time-consuming and expensive, because the plates, when glued, have to be screwed or nailed or loaded until the glue has dried or polymerised. The joints have to be filled up, smoothed and sandpapered. Moreover, there is a high gluing risk: when the glue has dried or polymerised with one of the plates insufficiently connected, there is no adhesion, which cause a week construction ad a false ball reflection.
5. Because of atmospheric conditions (moisture and temperature) woody plates start extending and swelling so that the joints will show up in the layer. Also profiled aluminium plates combined with tongue and groove, will be loosened under pressure and show in the top layer. This is certainly the case with the crosscut joints that can move among themselves.
6. The floor may extend by several centimetres so that the proportions of the sports fields are not longer official.
7. The plates are subject to imprints due to point-pressure (e.g. the wheels of a basket tower). The hardness of the wood used or of the recycled synthetic is limited and especially aluminium will permanently deformed.
8. Because of the intensive use and bending of the floor the fibreboards weaken (a fibreboard cannot bend limitlessly) and the elasticity is not constant everywhere, moreover, multiplex plates or constructions of wooden strips are very stubborn and only elastic under heavy pressure.
9. The construction gives the floor a minimum thickness of several centimetres which, due to the considerable differences in level, may create problems for the renovations of existing floors.
10. When a woody plate is only covered at one side e.g. by installing a top layer, it shows the tendency to warp, because one side can still takes up moisture and the other cannot.
11. Under repeatedly heavy pressure the plates may crack or break or remain permanently deformed.
12. Multiplex or fibreboards are by nature inflammable.
13. Floors as above described have another disadvantage. The flexure under dynamic pressure is restricted and spreads all over a large surface. Under a dynamic pressure of 75 kg the flexure only amounts to 2 or 2,5 mm, whereas a good sports floor should at least have 4 to 5 mm.

From CH 631228 A a sports floor is known, which comprises a pressure-spreading layer made of superimposed glued PVC or polyethylene plates. A sports floor made of superimposed glued PVC or polyethylane plates howevers shows the disadvantage that it is temperature sensitive and susceptible to deformations following changes in the atmospheric temperature. Furthermore, in case of fire, toxid products are released.

From GB-A-2.035.434 and EP-A-790.371 a floor is known for use in technical rooms, the said floors comprising a plurality of steel panels laid on a supporting construction of a plurality of spaced apart knobs or orthogonal rails. In order to avoid irregular flexion implied by the weight of objects disposed on the floor, the floor panels disclosed in GB-A-2.035.434 and EP-A-790.371 need to be as rigid as possible. The reason is that flexion causes instability of the objects disposed on the floor and is far from aesthetic, especially when the steel plates are recovered with a top layer of tiles, as these tiles are subject to rejection from the floor due to flexion.

The invention aims at eliminating these disadvantages and in particular at constructing a sports floor that is of a very simple construction, cast-"iron", relatively cheap ant that furthermore in a simpler and better way meets the highest sportive-technical requirements (shock-absorption, elasticity and flexure, also in horizontal direction) and has a very long life span. This is achieved with the technical features of the characterising part of the first claim.

The prior art teaches away from the present invention, as in the floor of the present invention use is made of hardened steel plates for constructing the pressure-spreading layer which can stand flexure without loosing elasticity or flexibility, that is without permanent deformation. This property is actually afforded by the hardened character of the steel used in the pressure-spreading layer of the floor of this invention.

In the present invention the stubborn 'woody' or profiled aluminium pressure- spreading layer is replaced by thin hardened steel plates with a thickness of +/- 1 mm. These plates are not welded, but simply glued together.

Never before steel has been used in an elastic sports floor.

In the floor of the present invention, the pressure spreading layer consists of 2 (or more) very thin steel plates of 1 mm (more or less) each that are very simply connected with one another in an overlapping way: super-imposed plates overlapping in a staggered manner. The plates have already been glued in the factory, so that when installing them only a protective foil has to be removed and the plates are simply put on top of one another. The glue used has a life-time adhesive strength and a great initial adhesive strength. The more one walks on the floor, the better the plates stick together or the pressure-spreading layer can spring millions of times without pulverizing and is not, like aluminium, permanently deformed.

The density and the thickness of the elastic bottom layer may be adjusted to the customers requirements as to cushioning (which according to DIN-standards should at least be 53 %).

The bottom layer is composed of flakes of synthetic material or of another elastic construction (4), the density of which can be adjusted according to the type of sportive discipline. The elasticity of the floor can be adjusted on request, what is not possible with stubborn woody constructions.

The floor can be freely constructed on any flat surface or on the existing (and worn-out) floor covering without haying to remove it and without any special preparation of the surface. A moister-proof protective layer (4) may be put loosely under the floor.

The construction of this type of sports floor is a lot simpler and offers a mass of advantages in comparison with all existing systems.

A very simple way entrance lids (9) to floor boxes (14) and anchors can be installed with screws by fixing a flange (11) under the opening in the steel plate (5). On top of this a lid (9) is put, covered with the same toplayer (10) as the floor. In order to avoid oxydation where the steel plates are cut, a stainless steel ring (12) is installed and covered with the same toplayer (10). Because of the small thickness of the elastic bottom layer and the thin steel plates, there are no noticeable differences in level and by a simple transitional surface relief the slight difference in thickness can be neutralized.
1. The total construction thickness of this floor is much thinner and stronger than that of all floors with woody or aluminium plates. The total thickness can be reduced by several centimetres, which eliminates inconvenient differences in level when renovating the floor.
2. The elasticity of the thin steel plates is much more constant and homogeneous. As a result the elastic bottom layer can also be thinner (and cheaper) and still give the floor a better cushioning.
3. The plates are rot proof. Due to the process of galvanization or the enamel layer, oxidation is practically nothing and certainly without any harmful consequences for the floor in the decades to come.
4. The plates will not warp due to moisture or temperature and the extension, even at a temperature difference of more than 50 DEG C, is linear and very restricted (temperature difference of 50 DEG C give a negligible extension).
5. The hardened steel pressure-spreading plate can stand flexure millions of times (like a steel spring) without loosing its elasticity or flexibility.
6. The steel plates used will not break or crack under heavier pressure nor will they be loosened like the profiled aluminium plates combined with tongue and groove.
7. Due to the permanent adhesive strength and the great initial adhesive strength of the glue applied on de the back side, the plates need not to be loaded nor screwed nor nailed, because they were made flat in the factory and do not warp due to temperature or air humidity. The risk of bad gluing is totally eliminated.
8. Since the thin steel plates (about 2 mm in all) are very flexible elasticity may simply be adjusted "à la carte". For a ballet floor an elastic bottom layer with low density is installed (= high elastic capacity), for a basketball floor high density is needed ( = a somewhat more stubborn construction).
9. The steel pressure-spreading plate is easily recyclable without environmental pollution.
10. This construction gives the floor an unlimited life span. Because of its elasticity it also has excellent sportive-technical qualities and a better protective function for bones, muscles and joints.
11. The steel pressure-spreading layer is a very good thermal conductor when under floor heating is applied.

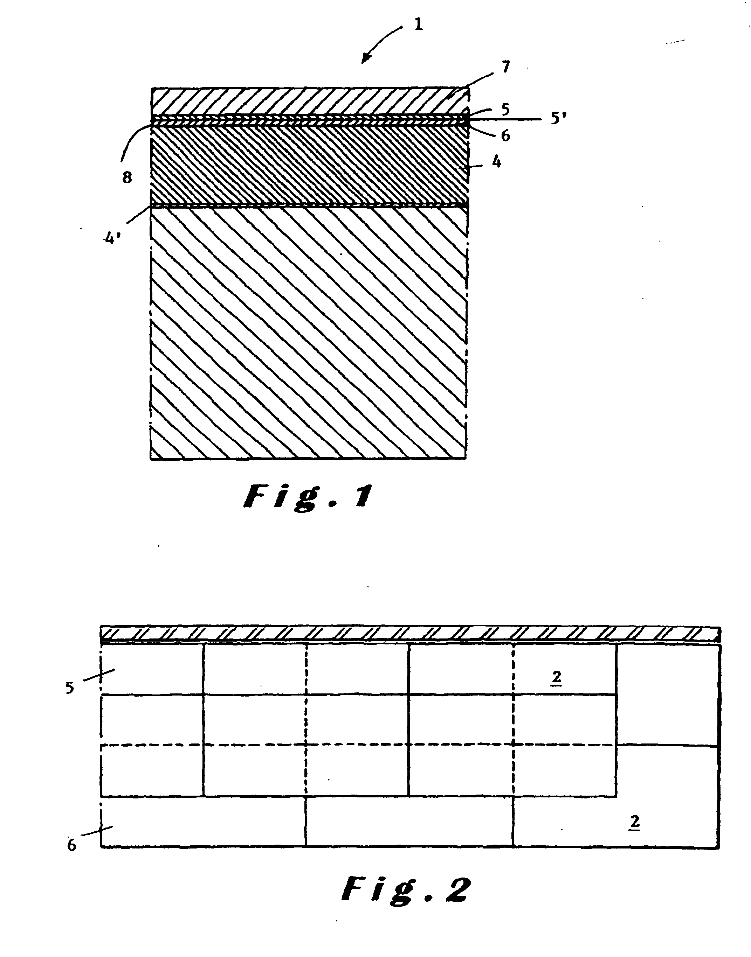

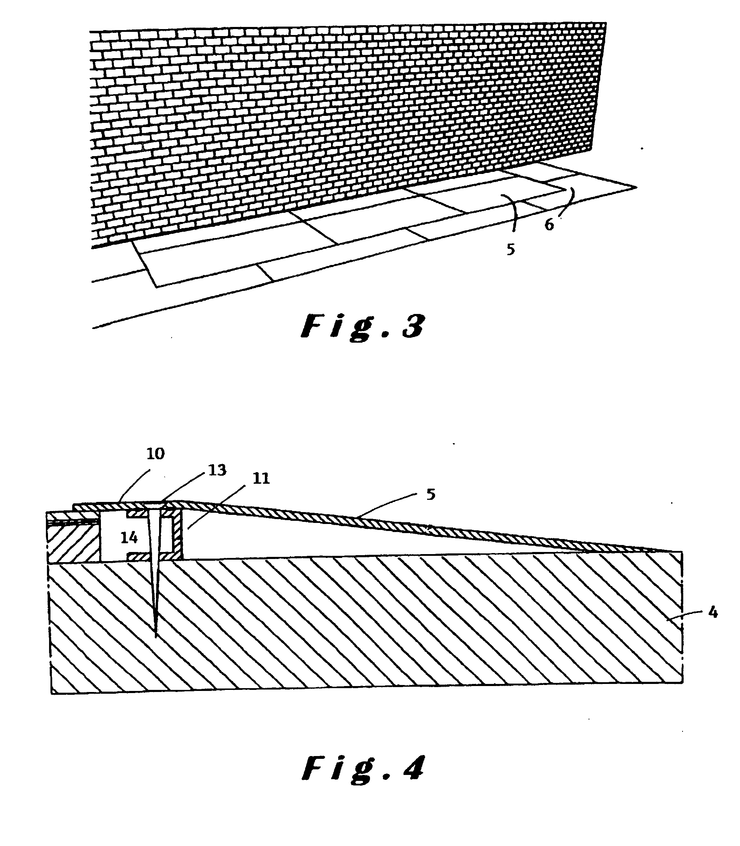

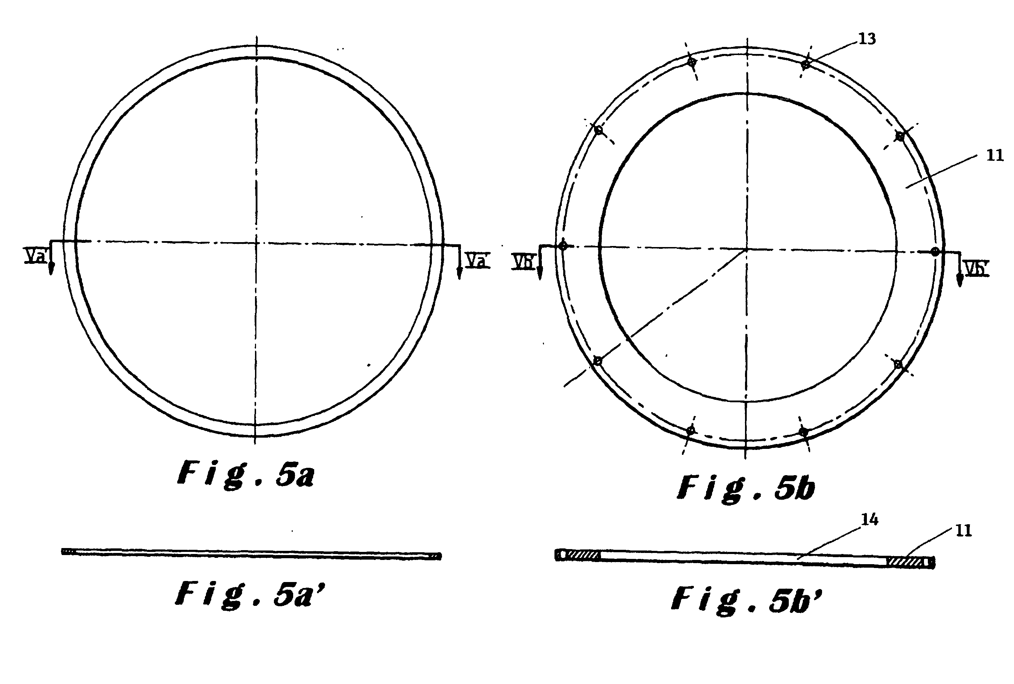

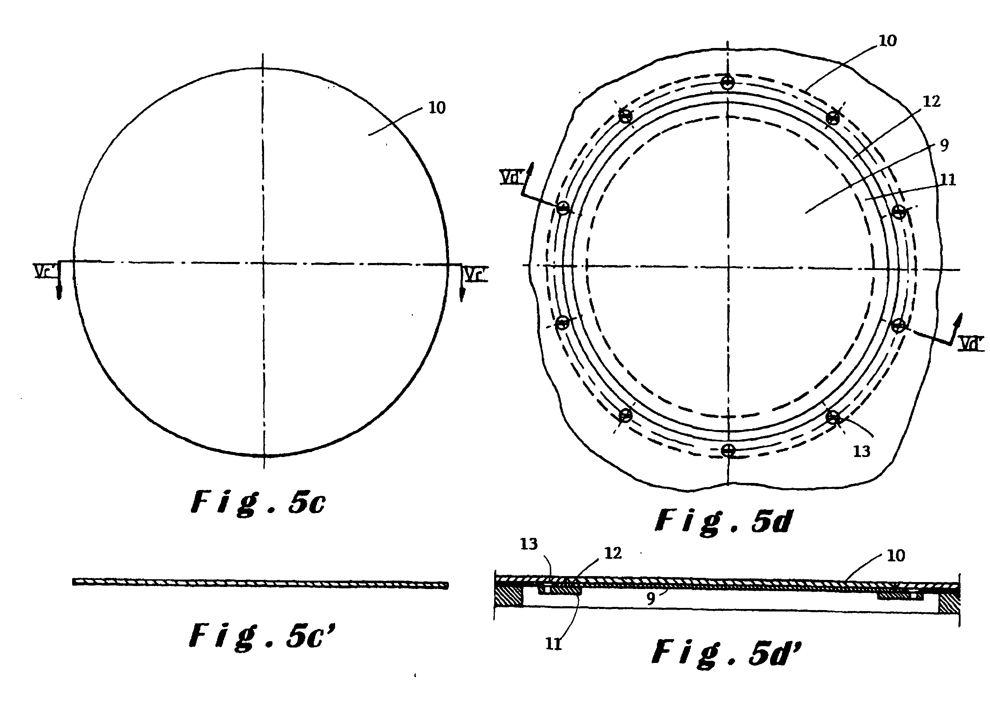

## Claims

1. Floor (1), mainly used as an indoor sports floor, comprising an elastic bottom layer (4) on top of which a loose laid pressure spreading layer (5, 6, 5') is applied, on top of the pressure-spreading layer a top layer (7) being applied, **characterised in that** the said pressure-spreading layer consists of thin hardened steel plates (5, 6).

2. A floor as claimed in claim 1, **characterised in that** the pressure spreading layer consists of at least two sub-layers (5, 6) of thin steel plates (2), two adjacent sub-layers sandwiching a layer of glue (5') between them, the at least two sub-layers (5, 6) being laid in such a way that each plate of a first sub-layer overlaps a plate of an adjacent sub-layer in a staggered manner.

3. A floor as claimed in claim 1 or 2, **characterised in that** steel plates are galvanised, enamelled steel plates or stainless steel plates.

4. A floor as claimed in any one of claims 1-3, **characterised in that** each steel plate has a back side, the back side being provided with a layer of a permanent adhesive glue (5').

5. A floor as claimed in any one of claims 1 - 4, **characterised in that** the steel plates are made according to the process of cold or warm rolling.

6. A floor as claimed in any one of claims 1 - 5, **characterised in that** the thickness of the pressure-spreading layer amounts to about 2 mm.

7. A floor as claimed in any one of claims 1- 6, **characterised in that** the bottom layer (4) is composed of flakes of a synthetic material or another elastic material.

8. A floor as claimed in any one of claims 1 - 7, **characterised in that** below the floor a moisture proof protective layer (4') is provided.

9. A floor as claimed in any one of claims 1-8, **characterised in that** the sports floor comprises a plurality of boxes (8) left out in the floor, each box being closed off by an entrance lid (9) which is covered with the material of the top layer (10), each box at a level below the steel plate (5) being surrounded by a flange (11) to be used as anchoring means, the box (8) at the level of the steel plates (5) being provided with a ring in stainless steel (12).

## Patentansprüche

1. Boden (1), hauptsächlich als Hallensportboden gebraucht, umfassend eine elastische Schicht (4), auf der eine lose verlegte, druckausbreitende Schicht (5, 6, 5') aufgebracht ist, wobei auf der druckausbreitenden Schicht eine Oberschicht (7) aufgebracht ist, **dadurch gekennzeichnet, dass** die druckausbreitende Schicht dünne gehärtete Stahlplatten (5, 6) umfasst.

2. Boden nach Anspruch 1, **dadurch gekennzeichnet, dass** die druckausbreitende Schicht zumindest zwei untergeordnete Schichten (5, 6) von dünnen Stahlplatten (2) umfasst, wobei zwischen zwei benachbarten untergeordneten Schichten eine Schicht Klebstoff (5') angeordnet ist, wobei zumindest zwei untergeordnete Schichten (5, 6) auf solche Weise verlegt sind, dass jede Platte einer ersten untergeordneten Schicht eine Platte einer benachbarten untergeordneten Schicht versetzt überlappt.

3. Boden nach einem der Ansprüche 1 oder 2, **dadurch gekennzeichnet, dass** die Stahlplatten verzinkte, lackisolierte Stahlplatten oder Edelstahlplatten sind.

4. Boden nach einem der Ansprüche 1 bis 3, **dadurch gekennzeichnet, dass** jede Stahlplatte eine Rückseite aufweist, wobei die Rückseite mit einer Schicht von permanentem Klebstoff (5') versehen ist.

5. Boden nach einem der Ansprüche 1 bis 4, **dadurch gekennzeichnet, dass** die Stahlplatten gemäß dem Verfahren des Kaltoder Warmwalzens hergestellt sind.

6. Boden nach einem der Ansprüche 1 bis 5, **dadurch gekennzeichnet, dass** sich die Dicke der druckverbreitenden Schicht auf ungefähr 2 mm beläuft.

7. Boden nach einem der Ansprüche 1 bis 6, **dadurch gekennzeichnet, dass** die Unterschicht (4) aus Flocken eines synthetischen Material oder eines anderen elastischen Materials gebildet ist.

8. Boden nach einem der Ansprüche 1 bis 7, **dadurch gekennzeichnet, dass** unter dem Boden eine feuchtigkeitsundurchlässige Schicht (4') vorgesehen ist.

9. Boden nach einem der Ansprüche 1 bis 8, **dadurch gekennzeichnet, dass** der Sportboden mehrere Boxen (8) umfasst, die in dem Boden ausgelassen sind, wobei jede Box mit einem Zugangsdeckel (9) abgesperrt ist, der mit dem Material der Oberschicht (10) bedeckt ist, wobei jede Box auf einer Höhe unter der Stahlplatte (5) durch einen Flansch (11) umgeben ist, der als Verankerungsmittel verwendet sein soll, wobei die Box (8) auf der Höhe der Stahlplatte (5) mit einem Edelstahlring (12) versehen ist.

## Revendications

1. Plancher (1), principalement utilisé en tant que plancher pour sports d'intérieur, comprenant une couche de fond élastique (4) sur laquelle est appliquée une couche flottante répartissant la pression (5, 6, 5'), sur laquelle couche répartissant la pression une couche supérieure (7) est appliquée, **caractérisé en ce que** ladite couche répartissant la pression consiste en minces plaques d'acier durci (5, 6).

2. Plancher selon la revendication 1, **caractérisé en ce que** la couche répartissant la pression consiste en au moins deux sous-couches (5, 6) de minces plaques d'acier (2), deux sous-couches adjacentes prenant en sandwich en elles une couche de colle (5'), lesdites au moins deux sous-couches (5, 6) étant posées de telle manière que chaque plaque d'une première sous-couche recouvre une plaque d'une sous-couche adjacente en quinconce.

3. Plancher selon la revendication 1 ou 2, **caractérisé en ce que** les plaques d'acier sont des plaques d'acier émaillées, galvanisées ou des plaques d'acier inoxydable.

4. Plancher selon une quelconque des revendications 1 - 3, **caractérisé en ce que** chaque plaque d'acier a un côté arrière, le côté arrière étant pourvu d'une couche de colle adhésive permanente (5').

5. Plancher selon une quelconque des revendications 1 - 4, **caractérisé en ce que** les plaques d'acier sont fabriquées selon le procédé du laminage à froid ou à chaud.

6. Plancher selon une quelconque des revendications 1-5, **caractérisé en ce que** l'épaisseur de la couche répartissant la pression est d'environ 2 mm.

7. Plancher selon une quelconque des revendications 1-6, **caractérisé en ce que** la couche de fond (4) est composée de flocons d'une matière synthétique ou d'une autre matière élastique.

8. Plancher selon une quelconque des revendications 1-7, **caractérisé en ce qu'**en dessous du plancher, une couche de protection imperméable à l'humidité (4') est prévue.

9. Plancher selon une quelconque des revendications 1 - 8, **caractérisé en ce que** le plancher pour sports comprend une pluralité de caissons (8) laissés dans le plancher, chaque caisson étant fermé par un couvercle d'entrée (9) qui est couvert par la matière de la couche supérieure (10), chaque caisson étant entouré à un niveau en dessous de la plaque d'acier (5) par une bride (11) à utiliser comme moyen d'ancrage, le caisson (8) étant pourvu au niveau des plaques d'acier (5) d'un anneau en acier inoxydable (12).
